# EUROPEAN PATENT SPECIFICATION

(11) **EP 3 671 429 B1**
(45) Date of publication and mention of the grant of the patent: **02.04.2025**
(21) Application number: 18215391.6
(22) Date of filing: 21.12.2018
(51) Int. Cl.: G06F 3/14, G09G 5/14, G06F 3/0488

(54) **MEDIA CONTENT TRANSFER BETWEEN DISPLAYS BY GESTURE CONTROL**
MEDIENINHALTSÜBERTRAGUNG ZWISCHEN ANZEIGEN DURCH GESTENSTEUERUNG
TRANSFERT DE CONTENU MULTIMÉDIA ENTRE DES AFFICHAGES PAR COMMANDE DE GESTES

(43) Date of publication of application: 24.06.2020
(73) Proprietor: Büld, Johannes, 48599 Gronau (DE)
(72) Inventor: Büld, Johannes, 48599 Gronau (DE)
(74) Representative: Grünecker Patent- und Rechtsanwälte PartG mbB

(56) References cited:
- WO-A1-2017/065391
- US-A1- 2014 282 224

## Description

The present invention relates to the display of content on electronic devices and in particular to the use of gesture control for initiating transfer of media content between displays.

Conventionally, when presenting information on a certain product to a customer, in addition to physically presenting the product, classical print media like paper catalogs or presentation of images and videos are used. However, these methods of providing information are limited and do not comply with present day requirements, since the number of products, which can be customized according to customer specifications, is steadily increasing.

Whereas a paper catalogue may provide a wealth of detailed specific information, a customer cannot get an overall impression of a customized product. On the other hand, certain image or video presentations of products are typically presenting a specific configuration of a product, which does, most probably, not matches the customer's expectations.

For example, when a customer plans to purchase, for instance, a car, he typically visits the showroom of a car dealership. At the showroom, he may view some car types and even may do a test drive with one of the available vehicles.

However, it is highly unlikely that the car dealer can show the customer a vehicle which exactly matches the customer's expectations. This is due to the enormous number of possible variations, which may be chosen by the customer, and the usually limited space in the showroom, which is of particular relevance in a case of large products like cars. For instance, product variations of a car may include the color of the varnish, the material of the interior, the presence of certain components like fog lights, the width and style of tires and rims and so on.

Conventionally, when customizing a car, the dealer makes use of illustrative material like small varnished plates or fabric patterns or the like. Further, it may be referred to a paper catalog illustrating some possible modifications. Additionally, the car could be customized on a handheld computer like a tablet computer while said illustrative material is presented.

However, when customizing a product in this way, the customer does not get a clear impression of the customized product as a whole due to the limited visualization capabilities.

WO 2017/065391 A1 relates to a method for sharing the display of a first device with a second device, wherein a certain display region is defined by a user and shared with the second device, wherein the trigger for sharing the display may be a user input or a detected establishment of a connection between the two devices.

In view of the foregoing, it would be desirable to provide new techniques for interactively presenting personalized information including a harmonic visual experience.

This is achieved by the features of the independent claims.

The present invention relates to an electronic control device which is used for triggering a display device to display a media content stored on a content server. The electronic control device comprises itself a display panel, and, in addition, a gesture capture unit and a control unit. The gesture capture unit is configured to capture a user input gesture. The control unit is configured to control the display panel to display a representation of the media content within a display area on the display panel. Further, the control unit is configured to control the display panel to change the position of the display area on the display panel according to a user input gesture captured by the gesture capture unit. The control unit is further configured to determine whether or not the display area meets a predetermined condition. Still further, the control unit is configured to, when it is determined that the display area meets the predetermined condition: (i) transmit identification information of the media content on the content server to the display device, (ii) transmit image data to the display device for display by the display device, and (iii) control the display panel to stop displaying the representation of the media content.

In other words, the electronic control device of the present invention triggers a display device to display a certain media content. For this purpose, the electronic control device transmits identification information being information necessary to uniquely identify and to access the media content, which is stored on a content server. In addition to the transmission of such identification information, the electronic control device transmits image data to the display device. The transmitted image data includes data corresponding to an image or picture, which is to be displayed on the display device as long as the media content has not been successfully accessed by the display device. In this manner, the viewer of the display device gets the impression of an immediate transmission of the picture or video to the display device as additionally transmitted data allow an immediate presentation of data relating to the requested content.

The image data is transmitted to the display device, whereas, for the media content to be displayed, the media content itself is not transmitted to the display device. Instead, the identification information is transmitted by the electronic control device enabling the display device to retrieve/access the media content and display the content as soon as it has been accessed successfully. In this manner, the transmission of data from the electronic control device to the display device may be performed rapidly and independent of the amount of data of the media content, which is accessed by the display device from the content server.

As soon as the predetermined trigger condition is met, the image data and the identification information is transmitted to the display device and the display of the media content on the display panel of the electronic control device is stopped. Since the display of the media content is stopped on the electronic control device, a user gets the impression of transmitting the displayed content from the electronic control device to the display device as soon as the predetermined condition is met. Thus, a transmission of displayed content from one display to another can be efficiently simulated to a user.

It is a particular advantage of the present invention that the media content and the image data are transmitted through different channels. Whereas the receiving device accesses the media content on the content server according to the identification information, the image data is transmitted directly to the display device. Since the data amount of the image data may be rather small in comparison to the data amount of the media content and the data transmission rate of the image transmission may be larger than between the content server and the display device, the display device is provided with the image data before the media content has been accessed, such that the image may be displayed in the temporal gap between receiving the identification information and being capable of displaying the media content.

According to another aspect, the input gesture capture unit and the display panel of the electronic control device may jointly form a touch-sensitive display unit. Further, the input gesture may be a gesture from within the display area in a direction towards a boundary of the touch-sensitive display unit, wherein the display area is displaying the representation of the multimedia content.

That is, the electronic control device may comprise a touchscreen (touch-sensitive display unit) including the input gesture capture unit and the display panel. Further, the gesture capture unit may capture an input gesture from within the area where the media content is displayed towards a boundary of the display panel. In a case where the touchscreen captures contact of a user's finger as the user input gesture, the user gets the impression of grabbing the media content and indicating a direction by swiping upon the touchscreen.

According to another aspect, the control unit of the electronic control device may further control the change of position of the display area such that the display area follows the captured user input gesture.

That is, in a case where the electronic control device comprises a touch-sensitive display unit, the display area, and hence the representation of the media content, follows the direction and position of the user input gesture.

According to another aspect, the control unit of the electronic control device may be further configured to control the position of the display area such that the display area keeps moving in a direction of the user input gesture after the user input gesture has ended.

In other words, when a user input gesture is detected, the display area follows the direction of the user input gesture and, when the input gesture has ended, the current motion of the display area at the time the user input gesture ended is maintained. This leads to the impression that the user "throws" or "flicks" the displayed media content in a certain direction.

According to another aspect of the present invention, the image data transmitted by the electronic control device may correspond to the representation of the media content displayed on the display panel.

That is, the transmitted image data includes an image of the media content as it is displayed on the display panel. The image may correspond to an image of the media content displayed on the display panel at a certain timing, for instance, when the display area meets the predetermined condition.

According to another aspect, the media content is a video, which is being reproduced on the display panel of the electronic control device. Further, the image data transmitted to the display device corresponds to a frame of the video. The frame of the video being transmitted as image data may be the first frame of the video. Alternatively, the frame of the video being transmitted as image data may be the frame displayed on the display panel at the timing when the display area meets the predetermined condition. As another alternative, the frame of the video being transmitted as image data may be any other predetermined frame of the video.

According to another aspect, in a case where the media content displayed on the display panel of the electronic control device is a video, the control unit may further transmit timing information indicating the current run time of the displayed video.

That is, in addition to the identification information and the image data, the electronic control device transmits an indication of the run time of the video when the display area meets the predetermined condition. Alternatively, the electronic control device may transmit information identifying the frame, which is displayed when the display area meets the predetermined condition, such that the display device may continue displaying the video starting from the frame indicated by the transmitted information identifying said frame.

According to another aspect, the gesture capture unit of the electronic control device may determine a speed of the user input gesture when capturing the user input gesture. The determined speed of the user input gesture may be associated with a certain time duration value, which is additionally transmitted to the display device for displaying the representation of the media content.

That is, in addition to the image data and the identification information, the electronic control device provides information on how long the representation of the media content is to be displayed on the receiving display device by providing said time duration value.

Said time duration value may be a first time duration value in a case where the determined speed of the user input gesture is equal to or larger than a predetermined threshold speed value. Further, the time duration value may be a second time duration value different from the first time duration value in a case where the determined speed of the user input gesture is lower than the predetermined threshold speed value.

In other words, the predetermined threshold speed value separates two input gesture speed ranges, wherein said ranges are associated with time duration values different from each other. For example, a captured speed lower than the threshold value may be associated with the time duration value larger than the time duration value associated with the captured speed larger or equal to the threshold value, or vice versa. With this approach, the user may intuitively provide information on the duration the media content is displayed on the receiving display device.

Said time duration value may be a first time duration value in a case where the determined speed of the user input gesture is equal to or less than a first predetermined threshold value. Further, the time duration value may be a second time duration value different from the first time duration value in a case where the determined speed of the user input gesture is equal to or larger than a second predetermined threshold value. Still further, the time duration value may be a third time duration value, which is determined on basis of the first predetermined threshold value, the second predetermined threshold value and the determined speed of the user input gesture, in a case where the determined speed of the user input gesture is larger than the first predetermined threshold value and smaller than the predetermined threshold value.

In other word, the time duration value may be a first and or a second time duration value if the determined speed of the user input gesture is below a first or a second threshold value, respectively. If the determined user gesture speed is in between the predetermined threshold values, that is, larger than the first threshold value and less than the second threshold value, the time duration value is calculated based on the threshold values and the determined speed.

For instance, the third time duration value may be time duration value calculated according linear mapping of determined speed and time duration value. However, any mapping or function linking a value of determined user gesture speed and time duration value can be used when the determined speed is between the predetermined threshold values, for instance, exponential, logarithmic, polynomial, or the like.

As indicated above, the electronic control device transmits image data and identification information when the display area, wherein the representation of the media content is displayed, meets a predetermined condition. The predetermined condition may be a condition of the display area exceeding the display panel to an amount equal to or larger than a predetermined amount. The display area may exceed the display panel, such that only an according portion of the media content is actually displayed on the display panel.

That is, when a user input gesture is captured and the display area is moved in accordance with said input gesture, the display area may be moved outside the display panel, such that only a portion of the media content is displayed. The predetermined condition is met, when the portion of the display area located outside of the display panel exceeds a certain threshold value. In particular, the threshold value may be defined as the ratio of the area of the display area outside of the display panel and the total area of the display area. When the predetermined condition is defined in this way, the user gets the impression of manually removing the media content from the electronic control device by moving it to the outside of the display panel. Alternatively, the predetermined condition may be met when the portion of the display area within the display panel falls below a certain threshold value. The threshold value may be defined as the ratio of the area of the display area within the display panel and the total area of the display area. Alternatively, the threshold value for each of described cases may be defined as a ratio of the areas of the display area within and outside of the display panel.

Alternatively, the predetermined condition may be a condition of the distance between the position of the display area on the display panel and a boundary of the display panel being equal to or less than a predetermined threshold value. The position of the display area may be defined as the position of a predetermined point of the display area on the display panel.

Further, a distance between the position of the display area on the display panel and a boundary of the display panel may be the shortest distance between the position of the display panel and a boundary of the display panel. In a case of the display area being of rectangular shape, the predetermined point of the display area may be one of the corner points of the display area. The predetermined point of the display area may, alternatively, be the center point of the display area or any other point of the display area.

Further, alternatively, the predetermined condition may be a condition of the direction of the input gesture being within a predetermined range of directions. That is, the condition is met when the media content displayed on the display panel is moved in a certain direction. For instance, the direction may be a direction within a predetermined range of directions with respect to the display panel.

In other words, the predetermined condition may be met, for example, when the display area is moved towards the top of the display panel, but it is not met when the display area is moved towards a right or a left direction on the display panel. In this manner, a user input gesture not within a predetermined range of directions may be associated with different functionalities, for example, fast forwarding a video displayed on the display panel. Further, a range of directions according to the actual physical relative positions and orientations of the electronic control device and the display device may be set as the predetermined range of directions associated with the predetermined condition. In this manner, a user may get the impression that the media content is pushed or flicked to the display device.

According to another aspect, the control unit of the electronic control device may further adjust the properties of the image data according to the display characteristics of the display device. The properties of the image data may include the resolution, luminance dynamic range, brightness, contrast, or the like.

For instance, in a case of the image data corresponding to a screenshot of the representation of the media content on the display panel of the electronic control device, and the display panel of the receiving display device being capable of displaying images of larger resolution, the image data transmitted by the electronic control device may transmit an image with a higher resolution than the image, which is displayed on the electronic control device.

According to another aspect, the electronic control device may transmit, in addition, sound data to the display device. When providing sound data in addition to image data, the display device may emit sound according to the received sound data. Thereby, another aspect is added to the user experience and a certain atmosphere may be generated.

According to another aspect, the electronic control device may transmit, in addition, lighting information to the display device. The lighting information may indicate control commands for the display device to emit light.

According to another aspect, the electronic control device may transmit, in addition, scent information to the display device. The scent information may indicate a certain scent or fragrance to be emitted by the display device.

According to another aspect, the electronic control device may transmit, in addition, environment control information to the display device. The environment control information may include instructions for controlling an environment control device, a window shutter, an air-conditioning device, a heater, or the like.

According to another aspect, the electronic control device may transmit, in addition, control commands to the display device. Said control commands may be, for instance, commands related to the brightness preferences of the display panel, the volume of sound emitted by the display device, or the like.

The electronic control device of the present invention may be one of a mobile phone, a tablet computer a multimedia table, a personal computer, and a laptop computer, or the like.

According to an aspect, the identification information is a uniform resource identifier (URI), or, in particular, a uniform resource locator (URL). That is, the identification information specifies the location of the media content on a computer network. The URL may reference to a webpage on the Internet, for example.

In a case where the identification information is a URL, the identification information and/or the image data may be transmitted to the display device via a computer network, in particular via the Internet. However, the transmission of the identification information and/or the image data is not limited to the Internet. Identification information and image data may be transmitted via any computer network, for instance, a local area network (LAN), a wireless local area network (WLAN), a Bluetooth connection between the electronic control device and display device, a mobile wireless data communication connection according to a technology like GSM, UMTS, LTE, or the like.

The present invention further relates to a display device for displaying a media content stored on a content server. The display device comprises a display panel and a control unit, wherein the control unit is configured to receive identification information of the media content on the content server from an electronic control device. Further, the control unit receives image data for display on the display device from the electronic control device and controls the display panel to display an image corresponding to the image data on the display panel. Further, the control unit is configured to access the media content stored on the content server according to the identification information and to control the display panel to display the media content on the display panel after display of the image corresponding to the image data.

In other words, the display device receives identification information of the media content and image data from the electronic control device and displays the image received from the electronic control device on the display panel. Further, the media content, which is stored on the content server and made accessible using the identification information, is accessed and displayed after the received image has been displayed on the display panel. By transmitting/receiving an image in addition to information on the location of the media content, a time duration, which is necessary to access the media content, may be subjectively shortened by displaying an image as long as the media content has not been accessed successfully. This is achieved by obtaining the image and the media content via different transmission channels.

According to another aspect, the display device may comprise a memory configured to store a playlist. The playlist defines an order of one or more identification information corresponding to one or more media contents on one or more content servers. The control unit of the display device is further configured to add the identification information received from the electronic control device to the playlist. The display device may then access the media content according to the sequence of identification information and display the media content one after another.

When receiving the identification information and adding it to the playlist, it may either be added at the first position of the playlist, such that corresponding media data is accessed and displayed immediately, or appended at the end of the playlists, such that corresponding media data is accessed and displayed when all the preceding media contents have been displayed by the display device. Alternatively, the identification information may be added to the playlist at any predetermined position.

According to another aspect, the display device may further comprise a timer configured to obtain a time duration of the displaying of the media content on the display panel. Further, the control unit may be configured to receive a time duration value from the electronic control device and stop displaying of the media content associated with the time duration value when the obtained time duration exceeds the received time duration value.

That is, in a case where a time duration value is transmitted by the electronic control device, the display device may start a timer as soon as the media content is displayed on the display panel and stop displaying of the media content as soon as the media content has been displayed on the display panel for a time duration equal to or larger than the time duration value received from the electronic control device.

In a case where the received time duration value is below a predetermined minimum time duration value, the predetermined minimum time duration value may be used instead of the received time duration value for displaying of the media content.

In a case where the received time duration value is above a predetermined maximum time duration value, the predetermined maximum time duration value may be used instead of the received time duration value for displaying of the media content

According to another aspect, the display device may further comprise a sound emitting unit. The control unit may be configured to receive sound data from the electronic control device and control the sound emitting unit to output sound according to the received sound data.

That is, in a case where sound data is received by the display device, said sound data is output by the sound emitting unit, in addition to displaying the image and accessing the media content. This allows for creating an audiovisual atmosphere/impression, which further masks the time necessary for accessing the media content.

According to another aspect, the display device may further comprise a light emitting unit. The control unit may further be configured to receive lighting information from the electronic control unit and control the light emitting unit to emit light according to the received lighting information.

For instance, the display device may comprise an LED, an array of LEDs, lightbulbs, laser diodes, or the like, as light emitting units. The light emitting unit emits light according to the received lighting information. Just as for sound emission, this additional visual stimulus further masks the time necessary for accessing the media content and, thereby, further increases the effects of simulated transmission speed of the media content.

According to another aspect, the display device may further comprise a scent emitting unit. The control unit may be further configured to receive scent information from the electronic control unit and to control the scent emitting unit to emit a scent according to the received scent information.

The scent emitting unit may be, for instance, an electric fragrance dispenser holding a certain number of fragrances and emitting one or a combination of fragrances when the control unit of the display device controls the fragrance dispenser according to received scent information.

According to another aspect, the display device may further comprise an environment control device. The control unit may be further configured to receive environment control information from the electronic control unit and to control the environment control device according to the received environment control information.

For instance, the environment control device may control a heater, an air-conditioning device, a window shutter, or the like based on the environment control information.

The present invention further relates to a media content transfer system. The media content transfer system comprises an electronic control device, a display device and a content server. The electronic control device, the display device and the content server are in communicative connection with each other. For example, the electronic control device, the display device and the content server may be connected to each other via a local area network (LAN), a wireless local area network (WLAN), a Bluetooth^{®} connection, a mobile communication connection, the internet or the like.

The electronic control device of the media content transfer system is used for triggering the display device to display a media content stored on the content server. The electronic control device comprises itself a display panel, a gesture capture unit and a control unit. The gesture capture unit is configured to capture a user input gesture. The control unit of the electronic control device is configured to control the display panel of the electronic control device to display a representation of the media content within a display area on the display panel. Further, the control unit of the electronic control device is configured to control the display panel of the electronic control device to change the position of the display area on the display panel according to a user input gesture captured by the gesture capture unit. The control unit of the electronic control device is further configured to determine whether or not the display area meets a predetermined condition. Still further, the control unit is configured to, when it is determined that the display area meets the predetermined condition: (i) transmit identification information of the media content on the content server to the display device, (ii) transmit image data to the display device for display by the display device, and (iii) control the display panel to stop displaying the representation of the media content.

The display device of the media transfer system is a display device for displaying the media content stored on the content server. The display device comprises a display panel and a control unit. The control unit of the display device is configured to receive identification information of the media content on the content server from the electronic control device. Further, the control unit of the display device receives image data for display on the display device from the electronic control device and controls the display panel of the display device to display an image corresponding to the image data on the display panel. Further, the control unit of the display device is configured to access the media content stored on the content server according to the identification information and to control the display panel to display the media content on the display panel after display of the image corresponding to the image data.

The content server of the media content transfer system is a content server storing media content, which may be accessed by the display device using identification information uniquely identifying the media content stored on the content server.

The present invention further relates to a display triggering method for triggering a display device to display media content stored on the content server. The display triggering method comprises displaying the representation of the media content in a display area on the display panel of an electronic control device and further capturing a user input gesture by a user gesture capture unit of the control device. Next, the position of the display area on the display panel is changed according to the captured user input gesture and it is determined, whether or not the display area meets a predetermined condition. When it is determined that the display area meets the predetermined condition, the following steps are performed: (i) transmitting identification information of the media content on the content server to the display device via a network; (ii) transmitting image data to the display device for display by the display device; (iii) stopping displaying the representation of the media content on the display panel of the electronic control device. Further, the method comprises displaying an image corresponding to the image data on the display device and accessing the media content stored on the content server according to the identification information. Still further, the media content accessed on the content server is displayed on the display device after displaying the image corresponding to the image data.

The present invention may be implemented as a method, a computer program or a computer-readable storage medium comprising instructions, when executed by a computer, cause the computer to carry out steps of a method according to the present invention.

The electronic control device, the display device and the display triggering method of the present invention improve transfer of media data between displays in that a user experience is not interrupted due to a delay caused by the transmission time of the media content. This is achieved by transmitting identification information uniquely identifying a location of media content stored on a content server and, additionally, transmitting image data, wherein first an image according to the image data is displayed on the receiving display device and, as soon as the media content has been accessed successfully, the image is not displayed anymore but, instead, a representation of the media content is displayed. This improves the transfer of media content in that an interruption of the user's impression is reduced by simulating transmittance speed.

Additional benefits and advantaged of the disclosed embodiment will become apparent from the detailed description of an embodiment and the drawings.

### BRIEF DESCRIPTION OF THE DRAWINGS

Fig. 1 is an illustration of a system comprising an electronic control device and a display device according to the present invention.
Fig. 2 is a block diagram showing the functional components of an electronic control device according to the present invention.
Fig. 3 is a diagram showing an outer appearance of an electronic control device according to the present invention.
Fig. 4 is a block diagram showing the functional components of a display device according to the present invention.
Fig. 5 is a flowchart showing method steps performed by an electronic control device according to the present invention.
Fig. 6a is a flowchart showing method steps performed by a display device according to the present invention.
Fig, 6b is a flowchart of a variation of a method performed by a display device.
Fig. 7 is an illustration of the predetermined condition of the display area according to the present invention.
Fig. 8 is an illustration of a system comprising an electronic control device and two display devices according to the present invention.

### DETAILED DESCRIPTION OF PREFERRED EMBODIMENT

In the following, a preferred embodiment will be described in detail through reference to the drawings.

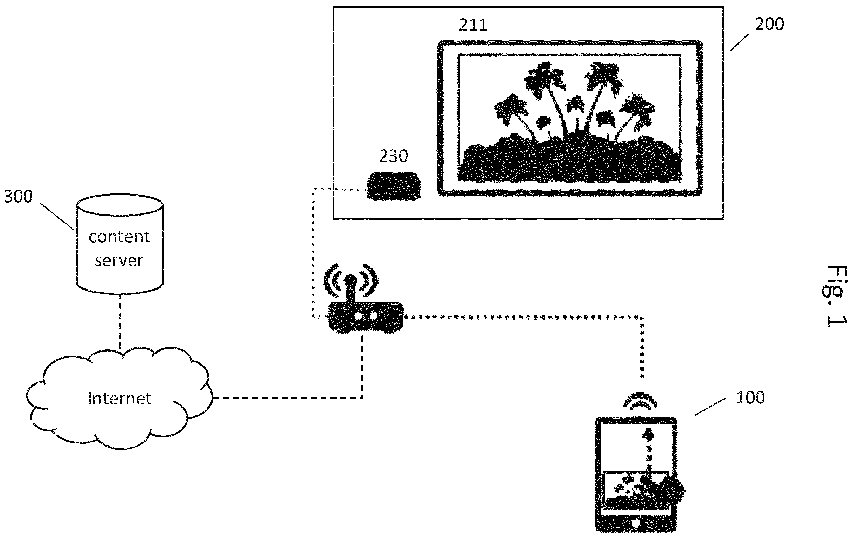

Fig. 1 shows an illustration of the basic concept of a system including an electronic control device 100 and a display device 200 according to the invention. The electronic control device 100 and the display device 200 are in communicative connection with each other. For example, the electronic control device 100 and the display device 200 are connected to a router in a wireless local area network (WLAN) 400. In Fig. 1, a tablet computer is shown as an exemplary electronic control device 100. However, the electronic control device could be a touch table, a personal computer, a smartphone, or the like. The electronic control device 100 and the display device 200 are further in communicative connection with a content server 300, which is accessible on the internet, which can be accessed by the electronic control device 100 and the display device 200 via the router.

Although in the present embodiment, the network connecting the electronic control device 100 and the display device 200 is a WLAN, it may be a local area network (LAN), a wide area network (WAN), a Bluetooth^{®} connection, a mobile communication connection, the internet or the like. The communicative connection between the electronic control device 100 and the display device 200 may be, as depicted in Fig. 1, implemented using a router, but it is not limited to this. The devices may be in direct communication without any third device or in any other arrangement allowing transfer of data between the electronic control device 100 and the display device 200.

Although in the setup of the embodiment illustrated in Fig. 1, the content server 300 is accessible via the internet, the content server 300 may be connected to the same network as the electronic control device 100 and the display device 200. That is, in this case, the electronic control device 100, the display device 200 and the content server are each connected to the same network, such that data stored on the content server 300 can be accessed by both the electronic control device 100 and the display device 200.

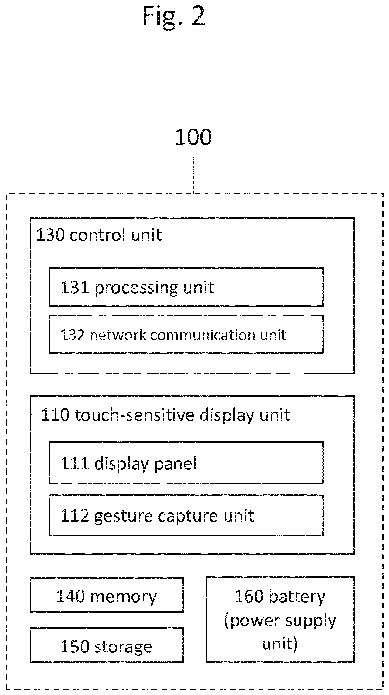

Fig. 2 is a block diagram showing an electronic control device 100 of the present invention for triggering the display device 200 to display a media content stored on the content server 300 according to the embodiment. The electronic control device 100 comprises a control unit 130, a touch-sensitive display unit 110, a memory 140, a data storage 150 and a battery (power supply unit) 160. The control unit 130 comprises a processing unit 131 and a network communication unit 132. The touch-sensitive display unit 110 is also referred to as the touchscreen in the following and comprises a display panel 111 and a gesture capture unit 112. Although not illustrated in Fig. 2, the display device 200 may be equipped with a user gesture capture unit as a user input interface.

Although in the present embodiment, the electronic control device 100 comprises a battery 160, power supply of the electronic control device 100 may be realized in other ways. For instance, using a power supply unit, which may be connected to a power outlet.

The processing unit 130 may be a CPU, a microprocessor, an integrated circuit, or the like. In the present embodiment, however, the control unit 130 is represented by a CPU of the tablet computer (the electronic control device 100). The network communication unit 132 may be a wireless network communication unit, a wire-bound network communication unit, a Bluetooth transceiver module, or the like. In the present embodiment, the network communication unit 131 is the WLAN module of the tablet computer 100 and allows the control unit 130 to transmit/receive data via the network and thus, to/from the display device 200 and the content server 300. The display panel 111 may be an LED display, a TFT display, an LCD display, or the like. In the present embodiment, the display panel is the LCD display of the tablet computer. The gesture capture unit 112 is a touch-sensitive unit sensitive to contact with e.g. a user's finger or a stylus. The gesture capture unit 112 may perform resistive, capacitive or any other sensing for determining the position of an input device on the surface of the gesture capture unit 112. The display panel 111 and the gesture capture unit 112 jointly form the touch-sensitive display unit (touchscreen) 110.

The control unit 130 and, in particular, the processing unit 131 is in communicative connection to the touchscreen 110, the memory 140 and the storage 150. The communicative connection may be implemented as a bus connection, a one-to-one connection or the like. Although in this embodiment, the communicative connection between said functional components of the electronic control device (100) is realized with a bus, any other data transmission implementation is feasible. The electronic control device comprises as memory 140 a RAM, a ROM or the like, the storage 160 for storing data and the battery 150 for power supply of all electronic components.

In the embodiment, the electronic control device 100 is a tablet computer. However, the electronic control device 100 may be a multimedia table, a smartphone, a personal computer, or the like.

The control unit 130 is configured to access a media content stored on a content server 300 via the network using the network communication unit 132. The media content is accessed, retrieved from the content server 300 and stored in the storage 160. Subsequently, the media content is displayed on the display panel 111. Alternatively, the media content may be temporarily and/or partially stored in the memory 140 and displayed on the display panel 111. In case of the media data being a video, it may be successively accessed and displayed on the panel without storing the entire media data in the memory 140 or the storage 150 but rather storing partial data necessary for displaying.

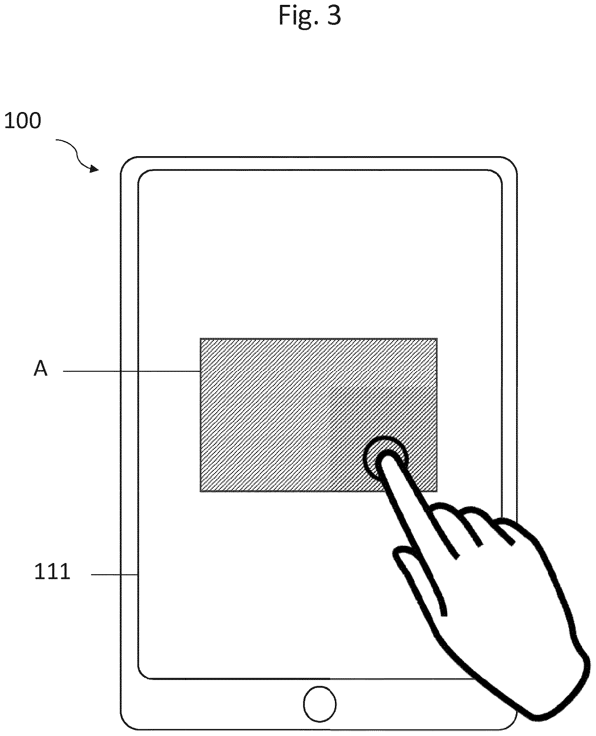

The media content, or more precisely, a representation of the media content is displayed within a certain display area A on the display panel 111, as illustrated in Fig. 3. The media content may be any type of media content, for instance, an image, a video, a piece of music, or the like. The representation of the media content that is displayed within the display area A on the display panel 111 may be a representation of the image, a certain frame of the video, a moving image according to video data or any visualization of music, for example, a continuously updated frequency spectrum of the piece of music.

The gesture capture unit 112 is configured to capture a user input gesture. That is, when a user touches the touchscreen 111, for instance, with his finger or a stylus, the position of contact is detected by the gesture capture unit 112. The detected contact position is transmitted to the processing unit 131 of the control unit 130. Since the relative position of the gesture capture unit 112 and the display panel 111 is known, a position on the display panel 111 is associated with the detected position of the input device on the gesture capture unit 112.

The electronic control device 100 is in communicative connection with the display device 200 via the network and may transmit data to the display device 200 using the network communication unit 132.

When the gesture capture unit 112 captures a user input gesture, the control unit 130 controls the display panel 111 to display the media content based on the captured user input gesture. In particular, the position of the display area A is changed in accordance with the captured position of the input device detected by the gesture capture unit 112. Further, the control unit 130 controls the display panel 111 to change the size or orientation of the display area A based on the captured user gesture.

The control unit 130 is configured to continuously determine whether or not the display area A the media content is displayed within meets a predetermined condition and, when it is determined that the display area A meets the predetermined condition, the control unit 130 transmits identification information of the media content on the content server to the display device 200. The identification information of the media content uniquely identifies the media content and allows for accessing the media content on the content server 300. In a case where the content server 300 is accessible via the internet, the identification information may be a Uniform Resource Locator (URL) or the like.

In addition to the transmission of identification information, the control unit 130 transmits image data to the display device 200 via the network using the network communication unit 132. The image data transmitted may correspond to an image of a representation of the media content as displayed within the display area A on the display panel 111, for example, a screenshot. For example, the control unit 130 may capture an image as displayed within the display area A and transmit said image as image data. In a case where the displayed media content is a video, the control unit 130 may transmit a certain frame of the video as image data to the display device 200.

Further, the control unit 130 is configured to control the display panel 111 to stop displaying the representation of the media content when the display area A meets the predetermined condition. That is, when the predetermined condition is met, the display of the media content is stopped and the identification information and the image data are transmitted to the display device 200.

Specific examples of the predetermined condition are described in detail below.

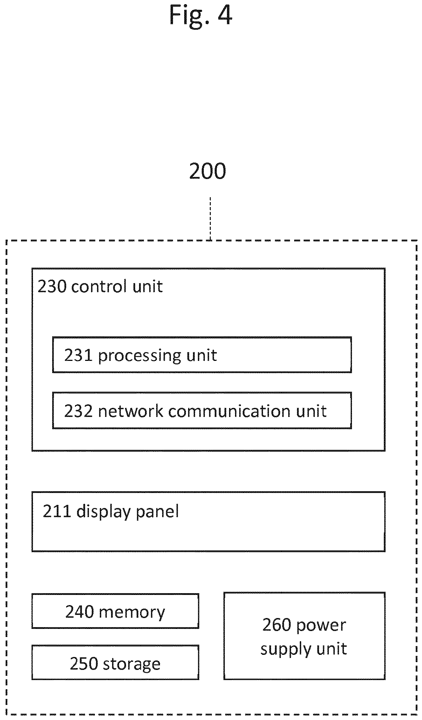

Fig. 4 is a block diagram showing a display device 200 for displaying a media content stored on a content server 300 according to the embodiment. The display device comprises a control unit 230 and a display panel 211. Just as the control unit 130 of the electronic control device 100, the control unit 230 of the display device 200 comprises a processing unit 231 and a network communication unit 232. The display device 200 further comprises a memory 240 like a RAM or a ROM, a storage 250 and a power supply unit 260.

Although all components of the display device 200 may be comprised in a single device, in the present embodiment, the display device 200 is realized as a computing device and a separate display device like a monitor or a television screen.

The control unit 230, the display panel 211, the memory 240 and the storage are communicatively connected to each other such that data may be exchanged and control commands can be sent in between all components of the display device. Said components are connected to the power supply unit 260 for power supply.

The control unit 230 of the display device 200 is configured to receive identification information of the media content on the content server 300 and image data from the electronic control device 100 using the network communication unit 232. When the identification information and the image data has been received, the control unit 230 controls the display panel 211 to display an image corresponding to the image data received from the electronic control device 100. For example, when the image data corresponds to a screenshot captured by the electronic control device 100, this screenshot is displayed on the display panel 211 of the display device 200. Further, when the identification information is received, the media content on the content server is accessed using the network communication unit 232 based on the identification information. In particular, in a case where the identification information is an URL, the network communication unit 232 accesses the media content on the content server 300 using the URL.

The control unit 230 retrieves the media content from the content server 300 and stores corresponding data in the storage 260. Alternatively, the control unit 230 may store data corresponding to part of the media content and store it temporarily in the memory 240, wherein the part of the media content retrieved from the content server 300 is the part necessary to display a representation of the media content on the display panel 211. That is, the media content may not be stored entirely on the display device 200 but only accessed and stored partially such that display of the representation of the media content may be performed. In this way, it is possible to establish e.g. video streaming. In any case, the control unit 230 accesses the media content and retrieves necessary data for displaying a representation of the media content on the display panel 211.

The control unit 230 further determines whether the media content has been retrieved to an amount necessary for displaying a representation of the media content on the display panel 211. This may be the case when the entire data of an image has been retrieved or, in a case of the media content being a video, a piece of music, or any media data representing a temporal sequence of images or sound, when a predetermined amount of data has been buffered in the memory 240 such that the representation of the media content can be started to be reproduced on the display panel 211. When it is determined that the representation of the media content can be displayed on the display panel, the control unit 230 controls the display panel to display the media content accessed on the content server 300 on the display panel 211. Further, when the media content is displayed, the display panel 211 is controlled to stop displaying the image according to the image data received from the electronic control device 100.

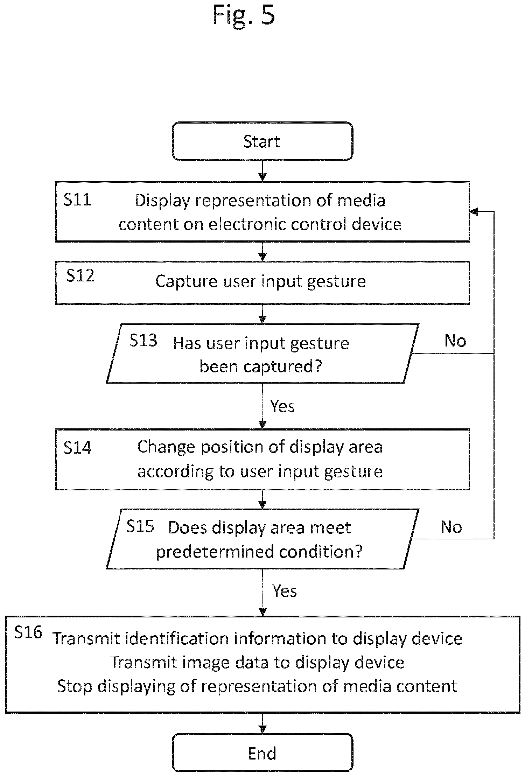

Fig. 5 is a flowchart illustrating the steps of a method performed by the electronic control device 100 according to the embodiment.

In step S11, a representation of media content stored on a content server 300 and accessed by the control unit 130 of the electronic control device 100 is displayed in a display area A on the display panel 111 of the electronic control device 100. The media content may be displayed in a full screen mode where the display area A coincides with the total area of the display panel 111 or in a display area A that covers a certain portion of the display panel 111.

In step S12, a user input gesture is captured by the gesture capture unit 112 of the electronic control device 100. An input gesture may, for example, refer to a detected position of a finger of a user on a touch-sensitive display unit 110 formed by the display panel 111 and the gesture capture unit 112 of the electronic control device 100.

In step S13, it is determined whether or not an input gesture has been captured. When an input gesture has not been captured (No in step S13), the representation of the media content on the display panel 111 is continued unaffected (return to step S11). When an input gesture has been captured (Yes in step S13), it is proceeded to step S14.

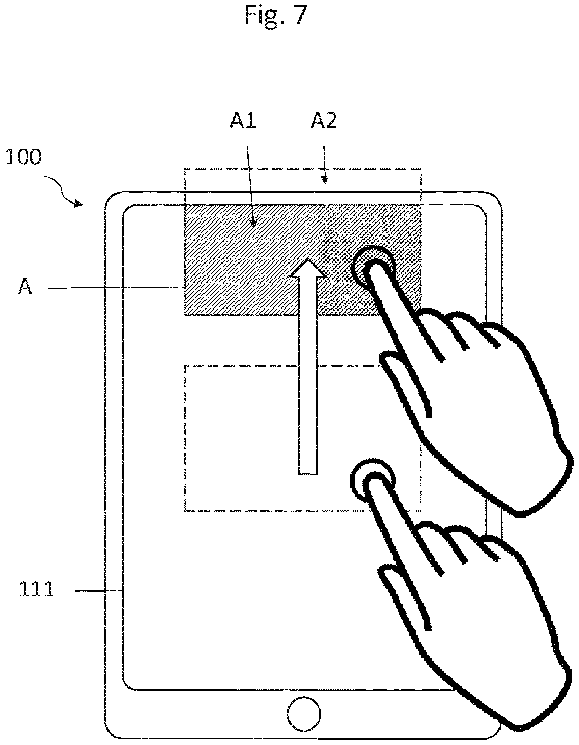

In step S14, the position of the display area A is changed in accordance with the captured input gesture. For example, the position of the display area A is changed to follow the position of a user's finger in contact with the touch-sensitive display unit 110, as illustrated in Fig. 7. Further, the size and/or orientation of the display area A on the display panel 111 may be altered. This may be implemented by, for example, changing the size of the display area when two contact points on the touchscreen are detected and their distance to each other increases/decreases.

In step S15, it is determined whether or not the display area A meets a predetermined condition. Examples for predetermined conditions and for determining of whether a condition is met are described below. In a case where the display area does not meet the predetermined condition (No in step S15), it is continued to display the media content and to change the position of the display area A in accordance with the captured user input gesture (return to step S11). If it is determined that the display area A meets the predetermined condition (Yes in step S15), it is proceeded to step S16.

In step S16, identification information of the media content stored on the content server 300 is transmitted to the display device 200. Further, image data is transmitted to the display device 200. Still further, displaying of the representation of the media content on the display panel 111 of the electronic control device 100, is stopped.

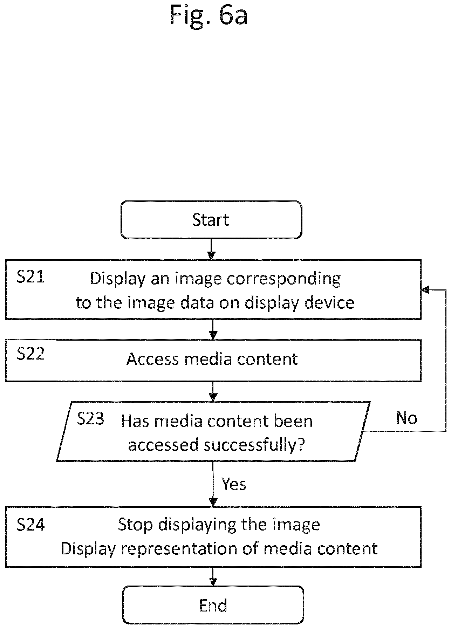

Fig. 6a is a flowchart illustrating the steps of a method performed by the display device 200 according to the embodiment. The illustrated flow starts when image data and identification information have been received from the electronic control device 100.

In step S21, an image which corresponds to the received image data is displayed on the display device 100.

In step S22, the media content stored on the content server 300 is accessed by the display device 200 using the identification information. For instance, data corresponding to the media content stored on the content server 300 is downloaded and stored by the display device 200.

In step S23, it is determined whether or not the media content has been accessed successfully. That is, it is determined whether or not the media content has either been accessed and/or downloaded entirely or to a predetermined amount necessary to display a representation of the media data on the display panel 211 of the display device 200. If it is determined that the media content has not been accessed successfully (No in step S23), it is continued to display the image corresponding to the image data on the display device 200 (return to step S21). If it is determined that the media content has been accessed successfully (Yes in step S23), displaying of the image corresponding to the image data transmitted by the electronic control device 100 is stopped and a representation of the media content associated with the identification information is displayed on the display panel 211 of the display device 200.

The combination of method steps S11 to S16 and S21 to S24 forms the display triggering method of the present invention according to the embodiment.

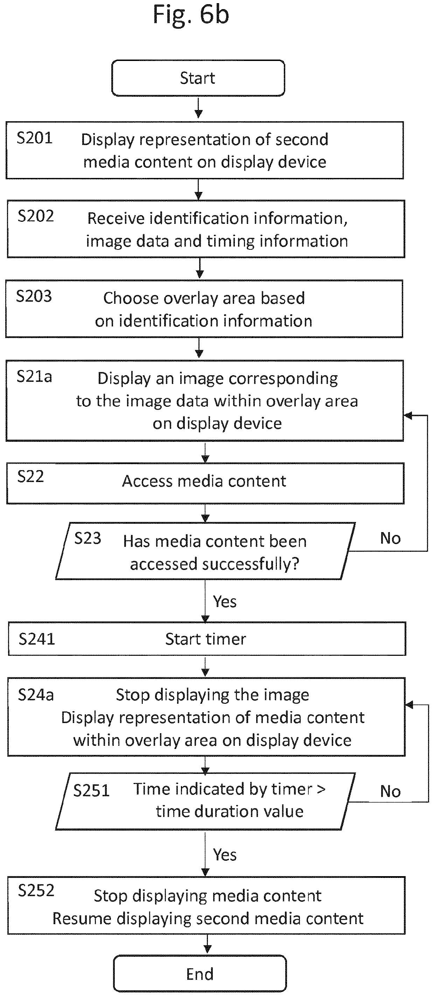

Fig. 6b is a flowchart illustrating the steps of a variation a method performed by the display device 200. In th3e following, only those steps differing from the method steps illustrated in Fig. 6a will be described in detail. The flow of the illustrated method starts before identification information has been received.

In step S201, the display device 200 displays a representation of second media content on the display panel. The second media content may be a video, an image, or the like and may be accessed from a server or stored in the storage 250.

In step S202, the display device 200 receives identification information, image data and timing information from the electronic control device 100.

Instep S203, an overlay area within the display area of the display panel 211 of the display device 200 is chosen, The overlay area is an area of the display panel 211 wherein the media content indicated by the identification information is to be displayed.

In step S21a, the image corresponding to the received image data is displayed within the overlay area of the display panel 211. During display of the image, the second media content may be continued to be displayed in the background of the display panel such that the overlay area with the image superposes the representation of the second media content.

In step S22, the media content is accessed on the content server 300 according to identification information.

In step S23, it is determined whether the media content has been successfully accessed.

If the media content has not been successfully accessed (No in step S23), the flow returns to step S21a. If the media content has been accessed successfully (Yes in step S23), the flow continued to step S241.

In step S241, a timer is started. That is the time that is passed from starting the timer is measured.

In step S24a, the image is stopped being displayed within the overlay area of the display panel 211 and the media content accessed by the display device 200 from the content server 200 is displayed within the overlay area of the display panel 211.

In step S251, it is determined whether the time value indicated by the timer is larger than the time duration value according to the timing information received from the electronic control device 100. If the time value indicated by the timer is less than the time duration value according to the timing information (No in step S251), the flow returns to step S24a. If the time value indicated by the timer is larger than the time value according to the timing information (Yes in step S251),the flow continues to step S252.

In step S252, the displaying of the representation of the media content within the overlay area of the display panel is stopped and the display device 200 resumes displaying of the representation of the second media content.

During displaying of the media content accessed on the content server according to the identification information received from the electronic control device 100, the representation of the second media content may be stopped in step S21a and resumed in step S252 or may be continued to be displayed while displaying the image data and the representation of the media content during steps S21a through S252.

Although in the method steps illustrated in Fig. 6b and described above, the timer is started when the media content has been successfully accessed, it may be started before displaying the image according to image data received from the electronic control device (that, is, before step S21a).

In the following, an example of a predetermined condition is described. As indicated above, when the display area A on the display panel 111 meets the predetermined condition, the image data and the identification information are transmitted by the electronic control device 100. Further, the displaying of the representation of the media content on the display panel 111 of the electronic control device 100 is stopped.

Fig. 7 illustrates an example of the situation when the display area A meets a predetermined condition in a case where the electronic control 100 device is a tablet computer comprising a touchscreen 110. As described above, the electronic control device 100 controls the display panel 111 to display a representation of the media content within the display area A on the display panel 111, and to change the position of the display area A in accordance with a captured input gesture.

As illustrated in Fig. 7, the display area A may exceed the boundaries of the display panel 111. In this case, a corresponding portion of the representation of the media content is displayed within the portion A1 of the display area A, which is located within with the display panel 111, such that the user may get the impression to drag the displayed content beyond the boundary of the display panel 111.

The predetermined condition of the embodiment is met when the display area A2 exceeding the display panel 111 is equal to or larger than a predetermined amount. That is, the identification information and the image data are transmitted to the display device 200 when the fraction of the area A2 outside the display panel 111 and the total area of the display area A inside the display panel 111 is larger than a predetermined value. For example, the predetermined value may be 0.9, 0.8, or any other number. Applying the described predetermined condition leads to the impression that the display content is moved to the outside of the electronic control device 100.

Alternatively, the predetermined condition may be met when the display area A1 within the display panel 111 is equal to or lower than a predetermined amount. For instance, the predetermiend condition may be met when the fraction of the display area A1 within the display panel 111 is equal to or lower than a predetermined number. For example, the predetermined number may be 0.1, 0.2, or any other number.

In the described embodiment, the gesture capture unit 112 and the display panel 111 of the electronic control device form a touch sensitive display unit 110. The present invention is not limited to a touch sensitive display unit 110 (touchscreen) but may comprise an input gesture capture unit 112 and a display panel 111 separate from each other. For instance, the electronic control device may comprise a monitor like a TFT or an LCD monitor as a display panel 111 and a mouse as a gesture capture unit, wherein the mouse comprises one or more buttons and a position change determination unit like a light sensor or a trackball. In this case, a position on the monitor is associated with the position of the mouse, e.g. on a table, and the position on the monitor is changed in accordance with the detected change of position of the mouse.

In the described embodiment, the position of the display area A is changed in accordance with the captured input gesture. In particular, the display area A follows the position of contact of e.g. a user's finger on the touchscreen 110. When it is detected that the input gesture has ended, however, the display panel 111 may be controlled to keep changing the position of the display area A. This may be implemented in a way that the rate of position change is maintained when the input gesture has ended. Alternatively, the rate of position change may be maintained at first, but reduced at a certain rate to provide the impression of an object sliding with friction. That is, the control unit 130 is configured to control the change of position of the display area A such that the display area A follows the captured user input gesture. Further, the display area A keeps moving in a direction of the user input gesture after the user input gesture has ended. That is, the display area A may meet the predetermined condition even in a case where the input gesture has ended before, such that the user gets the impression of throwing the displayed content over the edge of the display panel 111.

In the described embodiment, the image data transmitted to the display device 200 is a screenshot of the representation displayed on the display panel 110 of the electronic control device 100. However, in a case where the media content displayed on the display panel 110 is a video, the image data transmitted to the display device 200 may correspond to a frame of the video being reproduced on the display panel 110. The frame of the video corresponding to the image data being transmitted may be the first frame of the video, a predetermined frame of the video, or a frame displayed on the display panel 110 at the timing when the display area A meets the predetermined condition. In a case of the video being encoded in a format using reference frames, the image data transmitted to the display device 200 may correspond to one of the reference frames.

In the first embodiment, image data and identification information is transmitted from the electronic control device 100 to the display device 200. The control unit 130 may be further configured to transmit timing information indicating the run time of the displayed video, which is the media content. The run time of the displayed media content may be associated with a specific frame of the video data via a certain frame numbering and the frame rate of the video. In such a case, the display device 200 may proceed displaying the media content (the video) starting from the frame corresponding to the timing information received.

Further to the image data and identification information, the electronic control device 100 may be configured to determine a speed of the user input gesture when capturing the user input gesture, and transmit a time duration value, which is associated with the speed of the user input gesture, to the display device 100 for displaying the representation of the media content. The display device 200 may, in this case, comprise a timer configured to obtain a time duration of the displaying of the media content on the display panel 210, and displaying the representation of the media content is stopped after the representation of the media content has been displayed for the certain time duration.

The time duration value transmitted may be a predetermined first time duration value in a case where the determined speed of the user input gesture is equal to or larger than a predetermined threshold speed value, and maybe a second time duration value different from the first time duration value in a case where the determined speed of the user input gesture is lower than the predetermined threshold speed value.

The time duration value may be limited to a value larger than a predetermined minimum time duration value. Further, the time duration value may be limited to a value less than a predetermined maximum time duration value. Thereby it is ensured that the time duration value is a time duration value in between the predetermined minimum time duration value and the predetermined maximum time duration value.

The predetermined condition of the display area A in the described embodiment is a condition of the display area A exceeding the display panel 111 to an amount equal to or larger than a predetermined amount. However, the predetermined condition may be a condition of the distance between the position of the display area A on the display panel 111 and a boundary of the display panel 111 being equal to or less than a predetermined threshold value. A position of the display area A a may be defined as the position of, for example, the mid point of the display area A, the position of a corner of the display area A or any other predetermined point of with the display area A. The distance between a position of the display area A and a boundary of the display panel 111 may be the shortest distance between sets position and a boundary.

Alternatively, the predetermined condition of the display area A may be a condition of the direction of the movement of the display area A according to the user input gesture being within a predetermined range of directions. For example, in a case where the display panel 110 is rectangular, the predetermined condition may be that the display area A moved in a direction towards one of the four sides of the rectangular display panel 111. Direction boundaries may be defined by predetermined threshold angles with respect to a predetermined main axis/direction.

The predetermined condition of the display area A may further be a combination of described conditions. For example, the condition may be met when the display area A moves in a certain direction as described above and exceeds the display panel 111 to a predetermined amount. That is, when the display area exceeds beyond the boundary of the display panel 111 but its movement is not directed towards said predetermined direction (not within the predetermined angle range), the predetermined condition is not met.

Further, the electronic control device 100 may adjust the properties of the image data before transmitting the image data to the display device 200 according to the display characteristics of the display panel 211 of the display device 200. That is, the control unit 130 may change, for instance, the resolution, color preferences, brightness, aspect ratio, or the like, in order for the image data being optimized for display on the display device 200.

Further, the control unit 130 may be configured to transmit sound data to the display device 200, in addition to the image data and the identification information. The display device 200 may further comprise a sound emitting unit and the control unit 230 of the display device 200 may be configured to emit sound according to the sound information in addition to displaying the image according to the image data on the display panel 210 before displaying the media content after having accessed the media content on the content server.

Further, the control unit 130 may be configured to transmit lighting information to the display 200, in addition to the image data and the identification information. The display device 200 may further comprise a light emitting unit and the control unit 230 of the display to device 200 may be configured to emit light according to the light information in addition to displaying the representation of the media content on the display panel 211. The transmitted lighting information may, for instance, include information on either one of or any combination of a lighting intensity, a lighting color, a temporal and/or spatial lighting color/intensity pattern to be emitted by the light emitting unit of the display device

Further, the control unit 130 may be configured to transmit control commands to the display device 200. Control commands may be, for example, commands for web service calls, commands to turn on peripheral lights via interface, or the like. The commands to be transmitted may be predetermined or selected by the user.

Further, the control unit 130 may be configured to transmit environment control information to the display device 200. The environment control information may be information to control an environment control device of the display device 200, for instance, to control the state of shading means like window shutters, to control a heater, an air-conditioning device, or the like.

In the described embodiment, the electronic control device 100 is a tablet computer. However the present invention is not limited to this and the electronic control device 100 may be a tablet computer, a mobile phone, a multimedia table, a personal computer, a laptop computer, or the like.

Further, the display panel 210 of the display device 200 may be a monitor, a projector, a screen of a smart phone, a screen of a multimedia table, a screen of a tablet computer, or the like.

In the described embodiment, the media content is accessible via the Internet and the identification information is represented by a uniform resource locator (URL), which is a uniform resource identifier (URI). However, the identification information transmitted to the display device 200 may be any information uniquely identifying the media content and allowing for the display device 200 access said media content.

The storage 250 or the memory 240 of the display device 200 may be configured to store a playlist. The playlists stored by the display device 200 defines an order of one or more identification information of one or more media contents on one or more content servers. That is, the playlist uniquely specifies a sequence of media contents associated with identification information. The control unit 230 may be further configured to add the identification information received from the electronic control device 100 to said playlist, and to control the display panel 211 to display a representation of the media contents associated with the identification information on the playlists one after another.

The media content displayed may be a website displayed in a browser window on the electronic control device 100. In this case, specific objects from the website can represent the media content. In this case, the control unit 130 is further configured to identify the object to be transmitted based on the input gesture. For example, the object is identified based on the initial position of the input gesture. That is, when a user touches the touch sensitive surface 112 at a certain position, the object that is currently displayed at said position is identified by the control unit 130 as the media content for which identification information is to be transmitted to the display device 200. Accordingly, identification information corresponding to said object within the website is transmitted to and displayed by the display device 200.

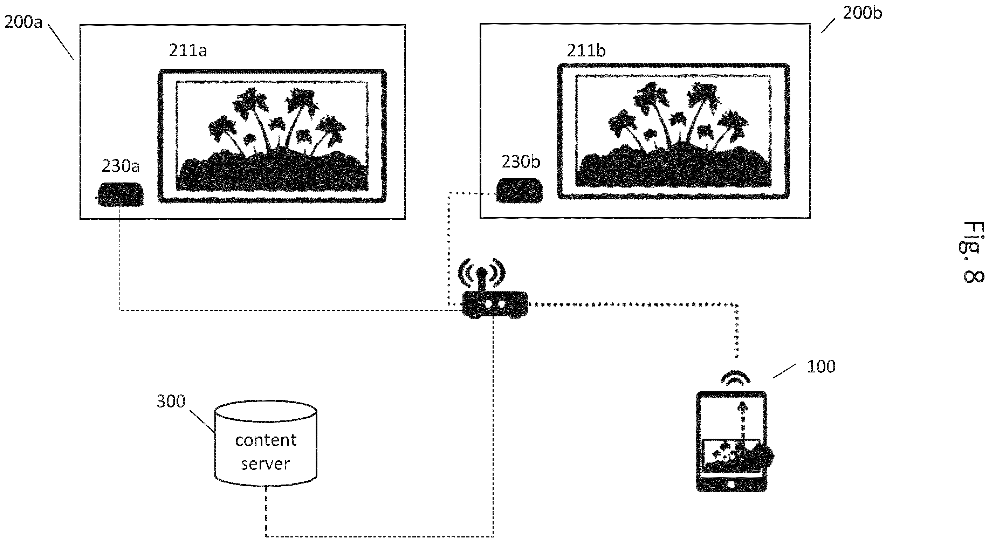

In the described embodiment, the electronic control device 100 is in communicative connection with a display device 200 and transmits identification information and image data to the display device 200 upon the display area meeting a predetermined condition. However, the electronic control device 100 may be connected to two or more display devices via the network, as illustrated in Fig. 8.

Fig. 8 shows an illustration of the basic concept of a modification of the described embodiment. Corresponding components/devices are labelled with the same reference numeral and repetitive detailed description of such components are not given here. The modification differs from the embodiment illustrated in Fig. 1 in that a first display device 200a and a second display device 200b are connected to the network. The two display devices may be of the same or of different kind. That is, the two display devices may be basically equal (e.g. two monitors with two computing devices) or different (e.g. a projector with computing device and a multimedia table). Further, instead of being accessible via the internet, the content sever may be directly connected to the network via the router. That is, electronic control device 100, display devices 200a and 200b and media content sever 300 may be part of the same local area network, for example.

In this case, more than one predetermined condition may be defined. For instance, each of the display devices may be associated with a certain predetermined condition. For instance, the first display device 200a is associated with a first predetermined condition and the second display device 200b is associated with a second predetermined condition. For instance, the first predetermined condition may be a condition of the display area A exceeding the display panel 111 by a predetermined amount and the motion of the display area is in a first predetermined range of angles (that is, in a first predetermined direction). Likewise, the second predetermined condition may be a condition of the display area A exceeding the display panel 111 by a predetermined amount and the motion of the display area is in a second predetermined range of angles (that is, in a second predetermined direction). For instance, image data and identification information is transmitted to the first display device 200a in a case where the first predetermined condition is met and to the second display device 200b in a case where the second predetermined condition is met. For example, the first and second predetermined conditions may be movement of the display area to the right or left of boundary of the display panel 111, respectively.

That is, the image data and the identification information may be transmitted to the first display device 200a when the content displayed on the electronic control device is shifted in a first direction and is transmitted to the second display device 200b when the content displayed on the electronic control device is shifted in a second direction. In this manner, the display device intended to display the media content may be chosen by the user by shifting the media content on the display panel 111 of the electronic control device in the associated direction. As mentioned above, the predetermined directions may be set according to the actual physical relative positions and orientations of the electronic control device 111 and the first and second display devices 200a and 200b. In this way, the user may intuitively flick the media content displayed on the electronic control device in a direction of the display device intended to display the media content.

Summarizing, the present invention relates to the display of media content on electronic devices and, in particular, to transfer of media content between electronic devices by gesture control. An electronic control device displays a representation of certain media content, which is accessible on a content server via a network. Further, the electronic control device captures a user input gesture and controls the display of the media content accordingly. When the captured user input gesture meets a certain condition, image data and identification information indicating the location of the media content on the content server are transmitted by the electronic control device to a display device. Upon reception of the image data, the display device displays the transmitted image. Further, upon reception of the identification information, the display device accesses the media content on the content server and, as soon as the media content has been accessed successfully, stops displaying of the image and starts displaying of a representation of the media content.

## Claims

1. A media content transfer system comprising a media content server (300) configured to store media content, an electronic control device (100), and a display device (200) in communicative connection with each other, wherein:
the electronic control device (100) is configured to trigger the display device (200) to display the media content stored on the content server (300), the electronic control device (100) comprising:
a first display panel (111);
a gesture capture unit (112) configured to capture a user input gesture; and
a first control unit (130) configured to
access the media content stored on the content server (300)
control the first display panel (111) to display a representation of the media content within a display area (A) on the first display panel (111),
control the first display panel (111) to change the position of the display area (A) on the first display panel (111) according to a user input gesture captured by the gesture capture unit (112),
determine whether or not the display area (A) meets a predetermined condition, wherein the predetermined condition is a condition of the display area (A) exceeding the first display panel (111) to an amount equal to or larger than a predetermined amount, and, when it is determined that the display area (A) meets the predetermined condition:
(i) transmit identification information of the media content on the content server (300) to the display device (200),
(ii) transmit image data to the display device (200) for display by the display device (200), wherein the image data corresponds to the representation of the media content displayed on the first display panel (111) and includes an image of the media content displayed on the first display panel (111) at a timing when the display area (A) meets the predetermined condition, and
(iii) control the first display panel (111) to stop displaying the representation of the media content, and
the display device (200) is configured to display the media content stored on the content server (300), the display device (200) comprising:
a second display panel (211); and
a second control unit (230) configured to
receive the identification information of the media content on the content server (300) from the electronic control device (100),
receive the image data for display on the display device (200) from the electronic control device (100),
control the second display panel (211) to display an image corresponding to the image data on the second display panel (211),
access the media content stored on the content server (300) according to the identification information, and
control the second display panel (211) to display the media content accessed on the content server (300) on the second display panel (211) after display of the image corresponding to the image data.

2. The media content transfer system according to claim 1, wherein
the gesture capture unit (112) and the first display panel (111) jointly form a touch-sensitive display unit (110);
the input gesture is a gesture from within the display area (A) in a direction towards a boundary of the touch-sensitive display unit (110), wherein the display area (A) is displaying the representation of the multimedia content; and
the first control unit (130) is further configured to control the change of position of the display area (A) such that the display area (A) follows the captured user input gesture.

3. The media content transfer system according to claim 1 or 2, wherein
the media content is a video being reproduced on the first display panel (111); and
the image data transmitted to the display device (200) corresponds to a frame of the video being reproduced on the first display panel (111), wherein
the frame of the video being transmitted as the image data is the frame displayed on the first display panel (111) at the timing where the display area (A) meets the predetermined condition.

4. The media content transfer system according to claim 3, wherein
the first control unit (130) is further configured to transmit timing information indicating the run time of the displayed video.

5. The media content transfer system according to any one of claims 1 to 4, wherein
the gesture capturing unit (112) is further configured to determine a speed of the user input gesture when capturing the user input gesture, and
the first control unit (130) is further configured to transmit a time duration value to the display device (200) for displaying the representation of the media content on the display device (200), the time duration value being associated with the speed of the user input gesture.

6. The media content transfer system according to any one of claims 1 to 5, wherein
the first control unit (130) is further configured to adjust the properties of the image data according to the display characteristics of the display device (200).

7. The media content transfer system according to any one of claims 1 to 6, wherein
the first control unit (130) is further configured to transmit sound data and lighting information to the display device (200).

8. The media content transfer system according to any one of claims 1 to 7, wherein
the first control unit (130) is further configured to transmit control commands to the display device (200).

9. The media content transfer system according to claim 8, wherein the display device (200) further comprises
a memory (240) configured to store a playlist, the playlist defining an order of one or more identification information of one or more media contents on one or more content servers (300); and
the second control unit (230) being further configured to add the identification information received from the electronic control device (100) to the playlist.

10. The media content transfer system according to any one of claims 1 to 9, wherein the display device (200) further comprises:
a timer configured to obtain a time duration of the displaying of the media content on the second display panel (211); and
the second control unit (230) being configured to
receive a time duration value from the electronic control device (100), and
stop displaying of the media content associated with the time duration value when the obtained time duration exceeds the received time duration value.

11. The media content transfer system according to any one of claims 1 to 10, wherein the display device (200) further comprises:
a sound emitting unit;
a light emitting unit; and
the second control unit (230) being further configured to
receive sound data from the electronic control device (100),
receive lighting information from the electronic control unit (100),
control the sound emitting unit to output sound according to the received sound data, and
control the light emitting unit to emit light according to the received lighting information.

12. A display triggering method of operating the media content transfer system of claim 1 for triggering the display device (200) to display a media content stored on the content server (300), the method comprising accessing, by the electronic control device (100), the media content stored on the content server (300);
displaying (S11) a representation of the media content in a display area (A) on the first display panel (111) of the electronic control device (100);
capturing (S12) a user input gesture by the gesture capture unit (112) of the electronic control device (100);
changing (S14), by the electronic control device (100), the position of the display area (A) on the first display panel (111) of the electronic control device (100) according to the captured user input gesture;
determining (S15), by the electronic control device (100), whether or not the display area (A) meets a predetermined condition, wherein the predetermined condition is a condition of the display area (A) exceeding the first display panel (111) to an amount equal to or larger than a predetermined amount and, when it is determined that the display area (A) meets the predetermined condition:
(i) transmitting (S16), by the electronic control device (100), identification information of the media content on the content server (300) to the display device (200);
(ii) transmitting (S16), by the electronic control device (100), image data to the display device (200) for display by the display device (200), wherein the image data corresponds to the representation of the media content displayed on the first display panel (111) and includes an image of the media content displayed on the first display panel (111) at a timing when the display area (A) meets the predetermined condition, and
(iii) stopping (S16), by the electronic control device (100), displaying the representation of the media content on the first display panel (111) of the electronic control device (100);
displaying (S21) an image corresponding to the image data on the display device (200);
accessing (S22), by the display device (200), the media content stored on the content server (300) according to the identification information; and
displaying (S24) the media content accessed on the content server (300) on the display device (200) after displaying the image corresponding to the image data.

## Patentansprüche

1. Ein System zur Übertragung von Medieninhalten, das einen Server für Medieninhalte (300), der zum Speichern von Medieninhalten konfiguriert ist, eine elektronische Steuervorrichtung (100) und eine Anzeigeeinrichtung (200) umfasst, die miteinander in Kommunikationsverbindung stehen, wobei:
die elektronische Steuervorrichtung (100) so konfiguriert ist, dass sie die Anzeigeeinrichtung (200) ansteuert, um den auf dem Inhaltsserver (300) gespeicherten Medieninhalt anzuzeigen, wobei die elektronische Steuervorrichtung (100) Folgendes umfasst:
ein erstes Anzeigefeld (111);
eine Gestenerfassungseinheit (112), die so konfiguriert ist, dass sie eine Benutzereingabegeste erfasst; und
eine erste Steuereinheit (130), die so konfiguriert ist, dass sie
auf den auf dem Inhaltsserver (300) gespeicherten Medieninhalt zuzugreifen,
das erste Anzeigefeld (111) zu steuern, um eine Darstellung des Medieninhalts in einem Anzeigebereich (A) auf dem ersten Anzeigefeld (111) anzuzeigen,
das erste Anzeigefeld (111) zu steuern, um die Position des Anzeigebereichs (A) auf dem ersten Anzeigefeld (111) gemäß einer von der Gestenerfassungseinheit (112) erfassten Benutzereingabegeste zu ändern,
festzustellen, ob der Anzeigebereich (A) eine vorbestimmte Bedingung erfüllt oder nicht, wobei die vorbestimmte Bedingung eine Bedingung ist, dass der Anzeigebereich (A) das erste Anzeigefeld (111) um einen Betrag überschreitet, der gleich oder größer als ein vorbestimmter Betrag ist, und, wenn festgestellt wird, dass der Anzeigebereich (A) die vorbestimmte Bedingung erfüllt:
(i) Identifikationsinformationen des Medieninhalts auf dem Inhaltsserver (300) an die Anzeigeeinrichtung (200) übertragen werden,
(ii) Bilddaten zur Anzeige durch die Anzeigeeinrichtung (200) an die Anzeigeeinrichtung (200) übertragen, wobei die Bilddaten der Darstellung des auf dem ersten Anzeigefeld (111) angezeigten Medieninhalts entsprechen und ein Bild des auf dem ersten Anzeigefeld (111) angezeigten Medieninhalts zu einem Zeitpunkt enthalten, zu dem der Anzeigebereich (A) die vorbestimmte Bedingung erfüllt, und
(iii) die erste Anzeigetafel (111) so steuern, dass die Darstellung des Medieninhalts nicht mehr angezeigt wird, und
die Anzeigeeinrichtung (200) so konfiguriert ist, dass sie den auf dem Inhaltsserver (300) gespeicherten Medieninhalt anzeigt, wobei die Anzeigeeinrichtung (200) Folgendes umfasst:
eine zweite Anzeigetafel (211); und
eine zweite Steuereinheit (230), die so konfiguriert ist, dass sie
die Identifikationsinformationen des Medieninhalts auf dem Inhaltsserver (300) von der elektronischen Steuervorrichtung (100) zu empfangen,
die Bilddaten zur Anzeige auf der Anzeigeeinrichtung (200) von der elektronischen Steuervorrichtung (100) zu empfangen,
die zweite Anzeigetafel (211) zu steuern, um ein Bild anzuzeigen, das den Bilddaten auf der zweiten Anzeigetafel (211) entspricht,
auf den auf dem Inhaltsserver (300) gespeicherten Medieninhalt gemäß der Identifikationsinformation zuzugreifen und
die zweite Anzeigetafel (211) zu steuern, um den auf dem Inhaltsserver (300) aufgerufenen Medieninhalt auf der zweiten Anzeigetafel (211) nach der Anzeige des den Bilddaten entsprechenden Bildes anzuzeigen.

2. Das System zur Übertragung von Medieninhalten nach Anspruch 1, wobei
die Gestenerfassungseinheit (112) und das erste Anzeigefeld (111) gemeinsam eine berührungsempfindliche Anzeigeeinheit (110) bilden;
die Eingabegeste eine Geste aus dem Anzeigebereich (A) in Richtung einer Grenze der berührungsempfindlichen Anzeigeeinheit (110) ist, wobei der Anzeigebereich (A) die Darstellung des Multimedia-Inhalts anzeigt; und
die erste Steuereinheit (130) ferner so konfiguriert ist, dass sie die Änderung der Position des Anzeigebereichs (A) so steuert, dass der Anzeigebereich (A) der erfassten Benutzereingabegeste folgt.

3. Das System zur Übertragung von Medieninhalten nach Anspruch 1 oder 2, wobei
der Medieninhalt ein Video ist, das auf dem ersten Anzeigefeld (111) wiedergegeben wird; und
die an die Anzeigeeinrichtung (200) übertragenen Bilddaten einem Einzelbild des auf der ersten Anzeigetafel (111) wiedergegebenen Videos entsprechen, wobei
das als Bilddaten übertragene Einzelbild das Einzelbild ist, das auf der ersten Anzeigetafel (111) zu dem Zeitpunkt angezeigt wird, zu dem der Anzeigebereich (A) die vorbestimmte Bedingung erfüllt.

4. Das System zur Übertragung von Medieninhalten nach Anspruch 3, wobei
die erste Steuereinheit (130) ferner so konfiguriert ist, dass sie Zeitinformationen überträgt, die die Laufzeit des angezeigten Videos angeben.

5. Das System zur Übertragung von Medieninhalten nach einem der Ansprüche 1 bis 4, wobei
die Gestenerfassungseinheit (112) ferner so konfiguriert ist, dass sie eine Geschwindigkeit der Benutzereingabegeste bestimmt, wenn sie die Benutzereingabegeste erfasst, und
die erste Steuereinheit (130) ferner so konfiguriert ist, dass sie einen Zeitdauerwert an die Anzeigeeinrichtung (200) überträgt, um die Darstellung des Medieninhalts auf der Anzeigeeinrichtung (200) anzuzeigen, wobei der Zeitdauerwert mit der Geschwindigkeit der Benutzereingabegeste verknüpft ist.

6. Das System zur Übertragung von Medieninhalten gemäß einem der Ansprüche 1 bis 5, wobei
die erste Steuereinheit (130) ferner so konfiguriert ist, dass sie die Eigenschaften der Bilddaten entsprechend den Anzeigeeigenschaften der Anzeigeeinrichtung (200) anpasst.

7. Das System zur Übertragung von Medieninhalten gemäß einem der Ansprüche 1 bis 6, wobei
die erste Steuereinheit (130) ferner so konfiguriert ist, dass sie Tondaten und Beleuchtungsinformationen an die Anzeigeeinrichtung (200) überträgt.

8. Das System zur Übertragung von Medieninhalten gemäß einem der Ansprüche 1 bis 7, wobei
die erste Steuereinheit (130) ferner so konfiguriert ist, dass sie Steuerbefehle an die Anzeigeeinrichtung (200) überträgt.

9. Das System zur Übertragung von Medieninhalten gemäß Anspruch 8, wobei die Anzeigeeinrichtung (200) ferner Folgendes umfasst:
einen Speicher (240) umfasst, der so konfiguriert ist, dass er eine Wiedergabeliste speichert, wobei die Wiedergabeliste eine Reihenfolge von einer oder mehreren Identifikationsinformationen von einem oder mehreren Medieninhalten auf einem oder mehreren Inhaltsservern (300) definiert; und
die zweite Steuereinheit (230) ferner so konfiguriert ist, dass sie die von der elektronischen Steuervorrichtung (100) empfangene Identifikationsinformation zur Wiedergabeliste hinzufügt.

10. Das System zur Übertragung von Medieninhalten gemäß einem der Ansprüche 1 bis 9, wobei die Anzeigeeinrichtung (200) ferner Folgendes umfasst:
einen Timer, der so konfiguriert ist, dass er eine Zeitdauer der Anzeige des Medieninhalts auf dem zweiten Anzeigefeld (211) ermittelt; und
die zweite Steuereinheit (230) so konfiguriert ist, dass sie
einen Zeitdauerwert von der elektronischen Steuervorrichtung (100) empfängt und
die Anzeige des Medieninhalts, der mit dem Zeitdauerwert verbunden ist, zu stoppen, wenn die erhaltene Zeitdauer den empfangenen Zeitdauerwert überschreitet.

11. Das System zur Übertragung von Medieninhalten gemäß einem der Ansprüche 1 bis 10, wobei die Anzeigeeinrichtung (200) ferner umfasst:
eine Tonausgabeeinheit;
eine Lichtausgabeeinheit; und
die zweite Steuereinheit (230) ferner konfiguriert ist, um
Schalldaten von der elektronischen Steuervorrichtung (100) zu empfangen,
Beleuchtungsinformationen von der elektronischen Steuervorrichtung (100) zu empfangen,
die Schallemissionseinheit so zu steuern, dass sie Schall gemäß den empfangenen Schalldaten ausgibt, und
die Lichtemissionseinheit so zu steuern, dass sie Licht gemäß den empfangenen Beleuchtungsinformationen emittiert.

12. Ein Anzeigetriggerverfahren zum Betreiben des Systems zur Übertragung von Medieninhalten nach Anspruch 1 zum Triggern der Anzeigeeinrichtung (200), um einen auf dem Inhaltsserver (300) gespeicherten Medieninhalt anzuzeigen, wobei das Verfahren umfasst:
Zugreifen auf den auf dem Inhaltsserver (300) gespeicherten Medieninhalt durch die elektronische Steuervorrichtung (100);
Anzeigen (S11) einer Darstellung des Medieninhalts in einem Anzeigebereich (A) auf dem ersten Anzeigefeld (111) der elektronischen Steuervorrichtung (100);
Erfassen (S12) einer Benutzereingabegeste durch die Gestenerfassungseinheit (112) der elektronischen Steuervorrichtung (100);
Ändern (S14) der Position des Anzeigebereichs (A) auf der ersten Anzeigetafel (111) der elektronischen Steuervorrichtung (100) durch die elektronische Steuervorrichtung (100) gemäß der erfassten Benutzereingabegeste;
Bestimmen (S15) durch die elektronische Steuervorrichtung (100), ob der Anzeigebereich (A) eine vorbestimmte Bedingung erfüllt oder nicht, wobei die vorbestimmte Bedingung eine Bedingung ist, dass der Anzeigebereich (A) das erste Anzeigefeld (111) um einen Betrag überschreitet, der gleich oder größer als ein vorbestimmter Betrag ist, und, wenn bestimmt wird, dass der Anzeigebereich (A) die vorbestimmte Bedingung erfüllt:
(i) Übertragen (S16) von Identifikationsinformationen des Medieninhalts auf dem Inhaltsserver (300) durch die elektronische Steuervorrichtung (100) an die Anzeigeeinrichtung (200);
(ii) Übertragen (S16) von Bilddaten durch die elektronische Steuervorrichtung (100) an die Anzeigeeinrichtung (200) zur Anzeige durch die Anzeigeeinrichtung (200), wobei die Bilddaten der Darstellung des auf dem ersten Anzeigefeld (111) angezeigten Medieninhalts entsprechen und ein Bild des auf dem ersten Anzeigefeld (111) angezeigten Medieninhalts zu einem Zeitpunkt enthalten, zu dem der Anzeigebereich (A) die vorbestimmte Bedingung erfüllt, und
(iii) Anhalten (S16) der Anzeige der Darstellung des Medieninhalts auf der ersten Anzeigetafel (111) der elektronischen Steuervorrichtung (100) durch die elektronische Steuervorrichtung (100);
Anzeigen (S21) eines Bildes, das den Bilddaten entspricht, auf der Anzeigeeinrichtung (200);
Zugreifen (S22) durch die Anzeigeeinrichtung (200) auf den auf dem Inhaltsserver (300) gespeicherten Medieninhalt gemäß der Identifikationsinformation; und
Anzeigen (S24) des auf dem Inhaltsserver (300) aufgerufenen Medieninhalts auf der Anzeigeeinrichtung (200) nach dem Anzeigen des den Bilddaten entsprechenden Bildes.

## Revendications

1. Système de transfert de contenu multimédia comprenant un serveur de contenu multimédia (300) configuré pour stocker du contenu multimédia, un dispositif de commande électronique (100) et un dispositif d'affichage (200) en connexion communicative les uns avec les autres, dans lequel :
le dispositif de commande électronique (100) est configuré pour déclencher le dispositif d'affichage (200) pour afficher le contenu multimédia stocké sur le serveur de contenu (300), le dispositif de commande électronique (100) comprenant :
un premier panneau d'affichage (111) ;
une unité de capture de gestuelle (112) configurée pour capturer une gestuelle d'entrée utilisateur ; et
une première unité de commande (130) configurée pour
accéder au contenu multimédia stocké sur le serveur de contenu (300)
commander le premier panneau d'affichage (111) pour afficher une représentation du contenu multimédia dans une zone d'affichage (A) sur le premier panneau d'affichage (111),
commander le premier panneau d'affichage (111) pour changer la position de la zone d'affichage (A) sur le premier panneau d'affichage (111) en fonction d'une gestuelle d'entrée utilisateur capturée par l'unité de capture de gestuelle (112),
déterminer si la zone d'affichage (A) satisfait ou non à une condition prédéterminée, dans lequel la condition prédéterminée est une condition selon laquelle la zone d'affichage (A) dépasse le premier panneau d'affichage (111) d'une quantité égale ou supérieure à une quantité prédéterminée, et, lorsqu'il est déterminé que la zone d'affichage (A) satisfait à la condition prédéterminée :
(i) transmettre des informations d'identification du contenu multimédia sur le serveur de contenu (300) au dispositif d'affichage (200),
(ii) transmettre des données d'image au dispositif d'affichage (200) pour affichage par le dispositif d'affichage (200), dans lequel les données d'image correspondent à la représentation du contenu multimédia affiché sur le premier panneau d'affichage (111) et comprennent une image du contenu multimédia affiché sur le premier panneau d'affichage (111) à un moment où la zone d'affichage (A) satisfait à la condition prédéterminée, et
(iii) commander le premier panneau d'affichage (111) pour arrêter d'afficher la représentation du contenu multimédia, et
le dispositif d'affichage (200) est configuré pour afficher le contenu multimédia stocké sur le serveur de contenu (300), le dispositif d'affichage (200) comprenant :
un second panneau d'affichage (211) ; et
une seconde unité de commande (230) configurée pour
recevoir les informations d'identification du contenu multimédia sur le serveur de contenu (300) en provenance du dispositif de commande électronique (100),
recevoir les données d'image pour affichage sur le dispositif d'affichage (200) en provenance du dispositif de commande électronique (100),
commander le second panneau d'affichage (211) pour afficher une image correspondant aux données d'image sur le second panneau d'affichage (211),
accéder au contenu multimédia stocké sur le serveur de contenu (300) selon les informations d'identification, et
commander le second panneau d'affichage (211) pour afficher le contenu multimédia accédé sur le serveur de contenu (300) sur le second panneau d'affichage (211) après affichage de l'image correspondant aux données d'image.

2. Système de transfert de contenu multimédia selon la revendication 1, dans lequel l'unité de capture de gestuelle (112) et le premier panneau d'affichage (111) forment conjointement une unité d'affichage tactile (110) ;
la gestuelle d'entrée est une gestuelle allant de l'intérieur de la zone d'affichage (A) dans une direction vers une limite de l'unité d'affichage tactile (110), dans lequel la zone d'affichage (A) affiche la représentation du contenu multimédia ; et
la première unité de commande (130) est en outre configurée pour commander le changement de position de la zone d'affichage (A) de telle sorte que la zone d'affichage (A) suit la gestuelle d'entrée utilisateur capturée.

3. Système de transfert de contenu multimédia selon la revendication 1 ou 2, dans lequel
le contenu multimédia est une vidéo reproduite sur le premier panneau d'affichage (111) ; et
les données d'image transmises au dispositif d'affichage (200) correspondent à une trame de la vidéo reproduite sur le premier panneau d'affichage (111), dans lequel
la trame de la vidéo transmise en tant que les données d'image est la trame affichée sur le premier panneau d'affichage (111) au moment où la zone d'affichage (A) satisfait à la condition prédéterminée.

4. Système de transfert de contenu multimédia selon la revendication 3, dans lequel la première unité de commande (130) est en outre configurée pour transmettre des informations de minutage indiquant le temps d'exécution de la vidéo affichée.

5. Système de transfert de contenu multimédia selon l'une quelconque des revendications 1 à 4, dans lequel
l'unité de capture de gestuelle (112) est en outre configurée pour déterminer une vitesse de la gestuelle d'entrée utilisateur lors de la capture de la gestuelle d'entrée utilisateur, et
la première unité de commande (130) est en outre configurée pour transmettre une valeur de durée au dispositif d'affichage (200) pour afficher la représentation du contenu multimédia sur le dispositif d'affichage (200), la valeur de durée étant associée à la vitesse de la gestuelle d'entrée utilisateur.

6. Système de transfert de contenu multimédia selon l'une quelconque des revendications 1 à 5, dans lequel
la première unité de commande (130) est en outre configurée pour ajuster les propriétés des données d'image en fonction des caractéristiques d'affichage du dispositif d'affichage (200).

7. Système de transfert de contenu multimédia selon l'une quelconque des revendications 1 à 6, dans lequel
la première unité de commande (130) est en outre configurée pour transmettre des données sonores et des informations d'éclairage au dispositif d'affichage (200).

8. Système de transfert de contenu multimédia selon l'une quelconque des revendications 1 à 7, dans lequel
la première unité de commande (130) est en outre configurée pour transmettre des instructions de commande au dispositif d'affichage (200).

9. Système de transfert de contenu multimédia selon la revendication 8, dans lequel le dispositif d'affichage (200) comprend en outre
une mémoire (240) configurée pour stocker une liste de lecture, la liste de lecture définissant un ordre d'une ou plusieurs informations d'identification d'un ou plusieurs contenus multimédia sur un ou plusieurs serveurs de contenu (300) ; et
la seconde unité de commande (230) étant en outre configurée pour ajouter les informations d'identification reçues du dispositif de commande électronique (100) à la liste de lecture.

10. Système de transfert de contenu multimédia selon l'une quelconque des revendications 1 à 9, dans lequel le dispositif d'affichage (200) comprend en outre :
une minuterie configurée pour obtenir une durée de l'affichage du contenu multimédia sur le second panneau d'affichage (211) ; et
la seconde unité de commande (230) étant configurée pour
recevoir une valeur de durée de temps en provenance du dispositif de commande électronique (100), et
arrêter l'affichage du contenu multimédia associé à la valeur de durée lorsque la durée obtenue dépasse la valeur de durée reçue.

11. Système de transfert de contenu multimédia selon l'une quelconque des revendications 1 à 10, dans lequel le dispositif d'affichage (200) comprend en outre :
une unité d'émission de son ;
une unité d'émission de lumière ; et
la seconde unité de commande (230) étant en outre configurée pour
recevoir des données sonores en provenance du dispositif de commande électronique (100),
recevoir des informations d'éclairage en provenance de l'unité de commande électronique (100),
commander l'unité d'émission de son pour émettre un son en fonction des données sonores reçues, et
commander l'unité d'émission de lumière pour émettre de la lumière en fonction des informations d'éclairage reçues.

12. Procédé de déclenchement d'affichage pour faire fonctionner le système de transfert de contenu multimédia selon la revendication 1 afin de déclencher le dispositif d'affichage (200) pour afficher un contenu multimédia stocké sur le serveur de contenu (300), le procédé comprenant les étapes consistant à
accéder, par le dispositif de commande électronique (100), au contenu multimédia stocké sur le serveur de contenu (300) ;
afficher (S11) une représentation du contenu multimédia dans une zone d'affichage (A) sur le premier panneau d'affichage (111) du dispositif de commande électronique (100) ;
capturer (S12) une gestuelle d'entrée utilisateur par l'unité de capture de gestuelle (112) du dispositif de commande électronique (100) ;
changer (S14), par le dispositif de commande électronique (100), la position de la zone d'affichage (A) sur le premier panneau d'affichage (111) du dispositif de commande électronique (100) en fonction de la gestuelle d'entrée utilisateur capturée ;
déterminer (S15), par le dispositif de commande électronique (100), si la zone d'affichage (A) satisfait ou non à une condition prédéterminée, dans lequel la condition prédéterminée est une condition selon laquelle la zone d'affichage (A) dépasse le premier panneau d'affichage (111) d'une quantité égale ou supérieure à une quantité prédéterminée et, lorsqu'il est déterminé que la zone d'affichage (A) satisfait à la condition prédéterminée :
(i) transmettre (S16), par le dispositif de commande électronique (100), des informations d'identification du contenu multimédia sur le serveur de contenu (300) au dispositif d'affichage (200) ;
(ii) transmettre (S16), par le dispositif de commande électronique (100), des données d'image au dispositif d'affichage (200) pour affichage par le dispositif d'affichage (200), dans lequel les données d'image correspondent à la représentation du contenu multimédia affiché sur le premier panneau d'affichage (111) et comprennent une image du contenu multimédia affiché sur le premier panneau d'affichage (111) à un moment où la zone d'affichage (A) satisfait à la condition prédéterminée, et
(iii) arrêter (S16), par le dispositif de commande électronique (100), l'affichage de la représentation du contenu multimédia sur le premier panneau d'affichage (111) du dispositif de commande électronique (100) ;
afficher (S21) une image correspondant aux données d'image sur le dispositif d'affichage (200) ;
accéder (S22), par le dispositif d'affichage (200), au contenu multimédia stocké sur le serveur de contenu (300) en fonction des informations d'identification ; et
afficher (S24) le contenu multimédia accédé sur le serveur de contenu (300) sur le dispositif d'affichage (200) après affichage de l'image correspondant aux données d'image.
